(19) Europäisches Patentamt

European Patent Office

Office européen des brevets

(11) **EP 1 831 881 B1**

(12) **EUROPEAN PATENT SPECIFICATION**

(45) Date of publication and mention
of the grant of the patent:
**14.05.2008  Bulletin 2008/20**

(21) Application number: **05826723.8**

(22) Date of filing: **13.12.2005**

(51) Int Cl.:
*G11B 7/09* (2006.01)          *G11B 7/13* (2006.01)
*G11B 7/24* (2006.01)

(86) International application number:
**PCT/IB2005/054209**

(87) International publication number:
**WO 2006/067674 (29.06.2006 Gazette 2006/26)**

(54) **MULTI-SPOT DETECTOR ARRANGEMENT FOR MULTI-LAYER RECORD CARRIERS**

VIELPUNKTDETEKTORANORDNUNG FÜR MEHRSCHICHTIGE AUFZEICHNUNGSTRÄGER

DISPOSITIF DE DETECTION MULTIFAISCEAU POUR SUPPORTS D'ENREGISTREMENT MULTICOUCHES

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.12.2004  EP 04106744**

(43) Date of publication of application:
**12.09.2007  Bulletin 2007/37**

(73) Proprietor: **Koninklijke Philips Electronics N.V.
5621 BA  Eindhoven (NL)**

(72) Inventors:
• **SPRUIT, Johannes, H., M.
NL-5656 AA Eindhoven (NL)**
• **MARTENS, Hubert, C., F.
NL-5656 AA Eindhoven (NL)**
• **STALLINGA, Sjoerd
NL-5656 AA Eindhoven (NL)**

• **WOERLEE, Pierre, H.
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
EP-A- 0 749 116          EP-A- 0 959 463
EP-A- 1 209 669          EP-A- 1 220 210
US-A- 5 251 198          US-A- 5 625 609
US-A1- 2002 048 233

• PATENT ABSTRACTS OF JAPAN vol. 2003, no. 08, 6 August 2003 (2003-08-06) & JP 2003 099964 A (RICOH CO LTD), 4 April 2003 (2003-04-04)

**Description**

The present invention relates to a detector arrangement, an optical pickup device and a driving device for multi-layer record carriers, such as a dual-layer optical disc.

Optically recordable record carriers or information carriers are generally known and are used in recording apparatus which record data on the information carrier by means of a radiation beam, e.g., a laser beam. The radiation beam is focused on a recording layer on the information carrier. In the case of an adequate radiation beam intensity or radiation power, the optical properties of the recording layer at the location of the focal spot will change, as a result of which a mark is produced in the recording layer. By varying the radiation beam intensity, a pattern of marks can be formed in the recording layer. The recorded pattern contains the data to be recorded in coded form. Examples of such an optically recordable information carrier are the CD-R (Compact Disc Recordable) or CD-RW (Compact Disc Rewritable) or the DVD-R (Digital Versatile Disc Recordable) or the related DVD+R.

In order to extend the storage capacity of optically recordable information carriers, information carriers have been introduced which comprise a plurality of superposed information or recording layers. The recording layers of such multi-layer information carriers can be of a read-only and/or recordable (i.e. write-once) and/or rewritable type. Each recording layer in a multi-layer optically recordable information carrier can be inscribed separately by focusing the radiation beam on the relevant recording layer. The recording apparatus use a high Numerical Aperture (NA). Owing to this high NA, the diameter of the radiation beam at the location of the recording layers situated between the source of the radiation beam (e.g., laser light source) and the recording layer to be inscribed (intermediate layers) is comparatively large. As a result of this, the intensity of the laser beam at the location of the intermediate layers will be of inadequate intensity to produce marks in these layers, whereas producing marks in the recording layer to be inscribed is possible. Also, at the location of each of the recording layers having a distance between the respective layer and the radiation source which is larger than the distance between the recording layer to be inscribed and the radiation source, the intensity of the radiation beam is inadequate to produce marks in these layers owing to the comparatively large diameter of the beam. In case of e.g. a dual-layer optical disc, a laser beam is focused on one layer and a spacer distance to the other layer is chosen large enough to ensure reliable readout of each individual layer.

However, although the intermediate layers cannot be inscribed, they have influence on the radiation beam. A part of the radiation beam will be reflected, diffused, and absorbed by the intermediate layers. The remainder of the radiation beam, quantified by the transmission coefficient, will be transmitted by the intermediate layers. The magnitude of the transmitted part depends on the optical properties of the intermediate layers.

A disturbing effect resulting from the above influence is coherent crosstalk. The light reflected from the out-of-focus layer(s) interferes with the light reflected from the in-focus layer. This leads to a fringe pattern in the reflected light. The phase of this fringe pattern is a function of the optical spacer thickness and the wavelength of the laser light, and results in amplitude variations at the detector at low frequencies but also at frequencies above servo bandwidths. In practical optical recording systems, this fringe pattern due to the coherent crosstalk gives rise to noise in the push-pull (PP) radial tracking signal and the focus tracking signal, especially in case of no perfect alignment of the spot on the detector, and in the envelop variations of the HF signal, which may lead to increased jitter.

This noise generated in the PP radial and focus tracking signals due to the coherent crosstalk leads to increased dissipation in the actuator, focus errors during writing as well as reading, and radial errors during writing as well as reading. It is noted that due to wavelength changes as a function of temperature or between write and read operations, the local magnitude and polarity of the radial error may change in one drive (or between drives) of the record carrier.

Although coherent crosstalk can be reduced by using a laser which emits a wide spectrum, e.g. by HF modulation of the laser during reading, very clear coherent crosstalk effects still remain visible. Additionally, it has been recognized that coherent crosstalk effects are more visible in dual-layer discs of DVD+R technology when compared to DVD-ROM technology. This is caused by smaller modulation values on DVD+R media, and the fact that PP tracking instead of differential phase detection (DPD) tracking has to be used in the writing system. By switching to DPD tracking, the noise in the radial tracking signal is reduced during the reading process. In PP tracking, the signals obtained from radial detector halves are subtracted, while in DPD tracking, diagonal quadrant segments are summed in pairs and the resulting diagonal signals are compared in phase.

US 5,923,632 discloses an optical pickup device for a multi-layer recording medium, which comprises a 3-spot detector system having a main-beam receiving member and first and second side-beam receiving members disposed at a given distance apart from the main-beam receiving member and located at positions such that no interference is caused with the main beam reflected from an unfocused information signal storage layer of the multi-layer optical disc . The optical pickup device is further provided with a diffraction grating for dividing the light beam emitted from the light source into three separate beams composed of the main beam and the first and second side-beams. A focusing error is detected based on a detection result from the main-beam receiving member, and a tracking error is detected based on detection results from the first and second side-beam receiving members.

It is an object of the present invention to provide an improved detector configuration by means of which detrimental effects of coherent crosstalk can be suppressed.

This object is achieved by a detector arrangement as claimed in claim 1, by a pickup device as claimed in claim 4, and by a driving device as claimed in claim 6.

Accordingly, a detector configuration is proposed, which suppresses disturbing effects of coherent crosstalk by using at least two three-spot systems one of which can be used for focus error signals and the other one can be used for tracking error signals. Besides reducing focusing and tracking errors, the proposed detector configuration also allows to reduce spacer layer thickness between the information layers of the multi-layer record carrier.

The second side-beam detector means may comprise four quadrant detector elements for obtaining a focus error signal, wherein the second predetermined distance is larger than the first predetermined distance. Thereby, focus error signals can also be obtained from the second side-beam detector means, so that coherent crosstalk effects can be cancelled in the focus error signal.

Furthermore, the first side-beam detector means may comprise two half detector elements for obtaining a push-pull tracking error signal. Thereby, the tracking error detection system can be adapted for optimized crosstalk suppression.

The beam splitting means may comprise a diffraction grating. The diffraction grating allows precise separation of the radiation beam into the main beam and the first two of four side beams with small space requirements.

In the driving device, the beam splitting means may be adapted to generate the first pair of side-beams under a first predetermined angle with respect to the main beam, and to generate the second pair of side-beams at a second predetermined angle with respect to the main beam. This allows separate control of crosstalk for the tracking system and the focus system. Then, the first predetermined angle may be selected to obtain a path difference between the first pair of side-beams and the main beam of substantially zero or substantially an integer multiple of the radiation wavelength of the radiation source, and the second predetermined angle may be selected to obtain a path difference between the second pair of side-beams and the main beam of substantially half the radiation wavelength or substantially an odd multiple of half the radiation wavelength. This ensures that in the tracking error detection system, the amplitude effect of the coherent crosstalk on the main beam is in phase with respect to the amplitude effect of the first pair of side-beams. Additionally, in the focus error detection system, the amplitude effect on the main beam is in anti-phase with the amplitude effect of the second pair of side-beams. In both cases, the coherent crosstalk can thereby be suppressed efficiently.

Preferably, the beam splitting means may be adapted to generate the first pair of side-beams in a manner so that they impinge between grooves of a target information layer of the multi-layer record carrier, and to generate the second pair of side-beams in a manner so that they impinge on respective groups of the target information layer of the multi-layer record carrier.

Furthermore, focus error determination means may be provided for calculating a focus error by adding a value derived from the sum of focus error signals obtained from the pair of second side-beam detector means from a value of a focus error signal obtained from the main detector means, and tracking error determination means for calculating a tracking error by subtracting a value derived from the sum of tracking error signals obtained from the pair of the first side-beam detector means from a value of a tracking error signal obtained from the main detector means. Thus, two three-spot systems can be built by using the main beam detector means and the two pairs of side-beam detector means.

Additionally, calculating means may be provided for calculating a crosstalk value by subtracting a value derived from the sum of output signals obtained from the pair of second side-beam detector means from a value of an output signal obtained from the main detector means. Hence, a measure for the magnitude of the coherent crosstalk on the output HF-signal can be obtained. Furthermore, adjusting means may be provided for adjustment based on the obtained crosstalk value and envelope of a readout signal of the driving device. Thereby, envelope variations in the output HF-signals can be corrected or compensated.

The present invention will now be described based on a preferred embodiment with reference to the accompanying drawings in which:

Fig. 1 shows a schematic block diagram of a pickup unit according to the preferred embodiment;
Fig. 2 shows schematic diagrams indicating path differences and resulting fringes in a dual-layer optical disc; and
Fig. 3 shows a detector configuration according to the preferred embodiment. In the following, the preferred embodiment will be described in connection with a driving device for a dual-layer optical disc, such as a DVD (Digital Versatile Disc) dual-layer disc.

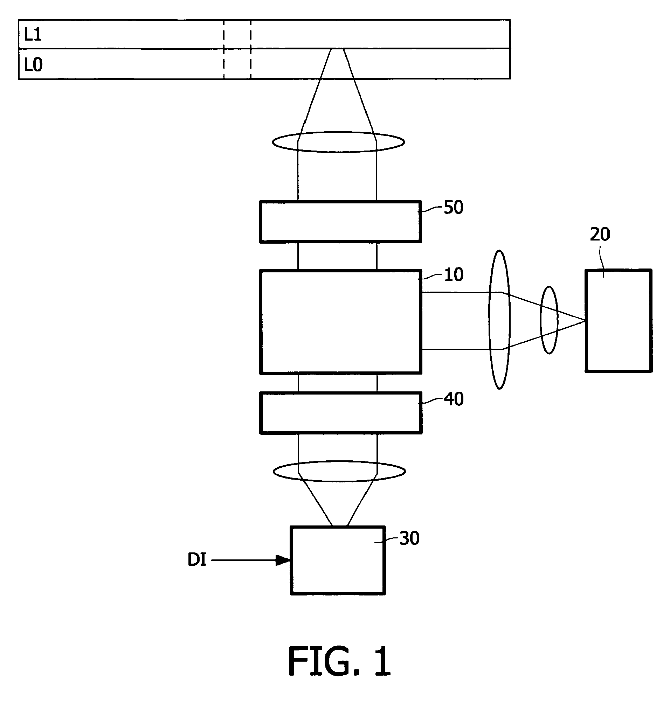

Fig. 1 shows a schematic block diagram of a pickup system for providing access to an upper first information layer L0 and a lower second information layer L1 of a dual-layer optical disc.

The optical pickup device according to the preferred embodiment comprises a light source 30, e.g. a semiconductor laser, serving as a radiation source, for emitting a light beam. In the beam direction, the light source 30 is followed by a collimator lens so as to align optical axes of the light beam to each other. Furthermore, a diffraction grating 40 is provided which serves as a beam splitter for generating a main beam and side beams, and a subsequent polarizing beam splitter 10 is provided to route light reflected from the dual-layer optical disc onto a photo detector 20 which receives reflected light beams. A quarter wavelength plate 50 and an objective lens are provided between the polarizing beam splitter 10 and the dual-layer optical disc in order to focus the light beams on one of the upper and lower information layers L0 and L1. Furthermore, the reflected light beams are condensed by a light condensing lens and a subsequent cylindrical lens provided between the polarizing beam splitter 10 and the photo detector 20 such that optical axes thereof are aligned to each other.

In particular, the diffused laser light beam emitted by the light source 30 is collimated by the collimating lens and separated by the diffraction grating 40 into 0-order light for the main beam and into +/-1-order light for auxiliary or side-beams.

According to the preferred embodiment, two pairs of side-beams are generated at different angles. This may be achieved by two integrated or separated diffraction gratings. The laser light separated into the main and side beams is passed through the beam splitter 10 and converged by the optical lens so as to be radiated towards a track of the first or second information layer L0, L1 of the dual-layer optical disc. The reflected laser beam is passed through the objective lens and enters after separation and reflection by the polarizing beam splitter the light condensing lens and the cylindrical lens and impinges on the photo detector 20 which is provided with several detector elements, as explained later.

The light beam or laser light generated by the light source 30 may be modulated by an input data stream DI during a write operation.

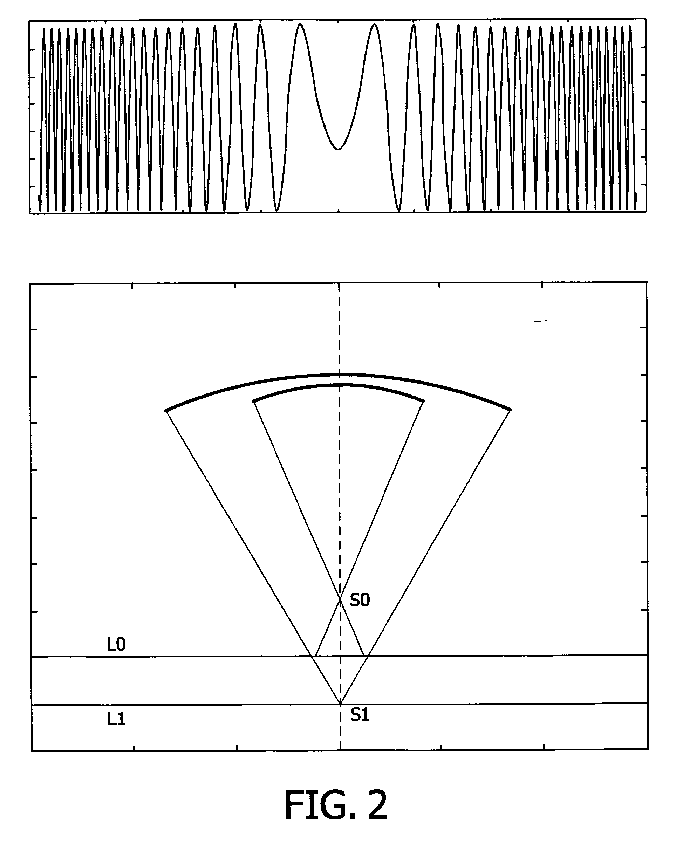

Fig. 2 shows diagrams indicating a fringe pattern and optical path lengths differences obtained by a reflection of the laser beam at the upper information laser L0 during a readout or write operation at the lower information layer L1. Optical path lengths S0 and S1 are shown for the beam components reflected at the upper information layer L0 and at the lower information layer L1, respectively. The superposition of the reflected beam components leads to a fringe pattern at the objective lens, as indicated in the upper diagram. These fringes cause amplitude variations or beats on the HF-signal and focusing/tracking signals at the output of the detector 20. In case of zero tilt of the dual-layer optical disc, the fringes are arranged symmetrically around the center of the objective lens. The coherent crosstalk is mainly determined by the central fringe in the middle of the upper diagram of Fig. 2 and the outer fringes on the left and right sides of the upper diagram of Fig. 2. The coherent crosstalk shows a strong dependence on the spacer thickness between the two information layers L0 and L1. It can be shown that a large spacer thickness and a large numerical aperture (NA) of the optical system are beneficial, since they lead to more fringes with relatively smaller crosstalk effect. In case of a tilted optical disc, the number of fringes differs on the left and right parts, so that more fringes contribute to crosstalk in the HF and tracking signals.

Furthermore, the beam landing position on the detector elements of the detector 20 has a major impact on tracking and focusing signals. In case of a beam landing error, symmetry in the detector patterns of the individual detector elements is canceled and amplitude variations or beats are caused in the HF tracking and focusing signals. The impact of coherent crosstalk on the tracking system is dominated by beam landing rather than tilt. In case of a three-spot PP tracking system, or a differential phase tracking system, coherent crosstalk is less detrimental, wherein a thick spacer layer between the two information layers L0 and L1 is beneficial to further reduced coherent crosstalk.

According to the preferred embodiment, a second three-spot system is introduced for the focus error signals by adding two additional side-beam detector elements arranged symmetrically with respect to the main beam detector element on the detector 20.

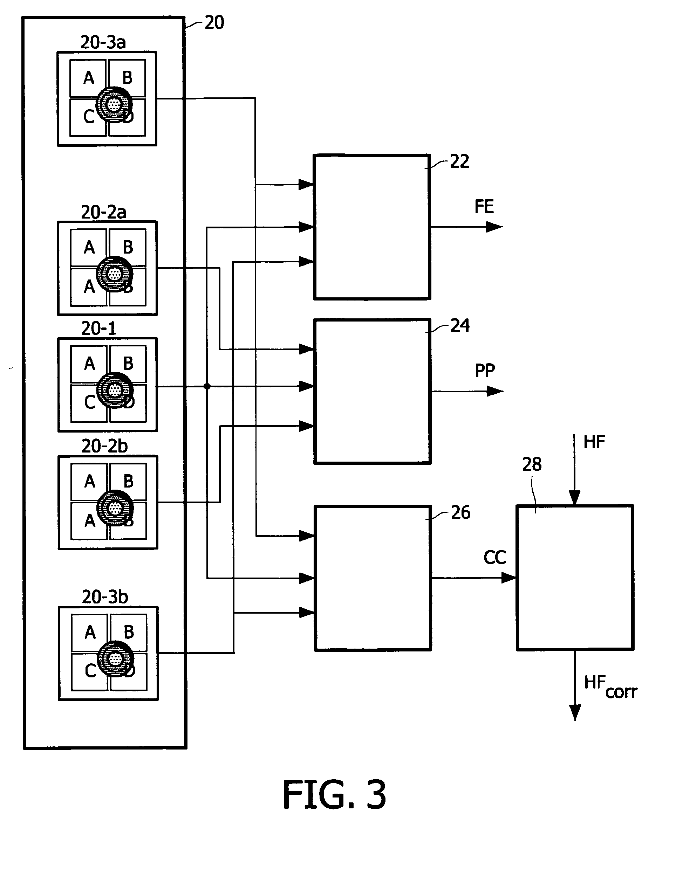

Fig. 3 shows a detector configuration according to the preferred embodiment with the detector 20 and processing circuitry for generating a focus error signal FE, a push-pull tracking signal PP, and a coherent crosstalk signal CC. Optionally, the coherent crosstalk signal CC can be used for controlling the envelope or amplitude of the HF output signal of the pickup device.

Due to the use of two additional side-beam detectors, two side-beam pairs (i.e. four side-beams) must be generated at the beam splitter 40, which can be achieved by at least one diffraction grating. Thus, a five-spot system is obtained. As an example, the additional pair of side-beams can be generated based on first order or second order light of the respective diffraction grating. The optical path difference of the satellite spots generated by the two pairs of side-beams with respect to the main spot can be controlled by selecting proper angles for the satellite spots. In this way, the satellite spots can have a desired fringe pattern which may be either in phase or in anti-phase with the fringe pattern of the main beam.

In the three-spot PP tracking system obtained by the main spot and the two inner satellite spots, the satellite spots are positioned between grooves on the surface of the lower information layer L1 and the push-pull signals PPa and PPb of the satellite spots are in anti-phase with the push-pull signal PPc of the main beam. In this case, the resulting tracking error signal PP can be derived by subtracting the sum of the push-pull signals PPa and PPb of the satellite spots from the push-pull signal PPc of the central spot, which can be expressed as follows:

$$PP = PPc - \gamma \, (PPa + PPb) \qquad (1)$$

wherein $\gamma$ indicates a specific correction parameter which can be obtained based on experimental results. To effectively cancel coherent crosstalk, the amplitude effect of the coherent crosstalk on the main beam should be in phase with respect to the amplitude effect of the satellite beams. Therefore, the path difference for the satellite beams should preferably be either 0 or $\lambda$, which denotes the wavelength of the laser beam. Of course, any integer multiple of the wavelength $\lambda$ could be used as well. However, generally a zero phase difference is the most practical choice. This means in practice, that the satellite spots should preferably be positioned close to the main spot.

In order to cancel the effects on the focus channel or focus system, an additional three-spot focus system is proposed. According to Fig. 3, the configuration of the detector 20 comprises four satellite or side-beam detectors 20-2a, 20-2b, 20-3a, and 20-3b and a central or main-beam detector 20-1. The two inner side-beam detectors 20-2a and 20-2b are used for generating the push-pull signals PPa and PPb, respectively, while the two outer side-beam detectors 20-3a and 20-3b are used for generating focus error signals FEa and FEb, respectively.

Similar to the main-beam detector 20-1, the focus side-beam detector 20-3a and 20-3b comprise four quadrants or quadrant detector elements A, B, C, and D based on which detection output the focus error signals FEa and FEb are generated. The tracking side-beam detectors 20-2a and 20-2b are adapted to generate signals of two half detector elements A and B, although they may as well comprise quadrant detector elements of which two are combined to obtain half detector elements. As an alternative, they may actually comprise only two half-detector elements.

As indicated in Fig. 3, the beam landing position (shown by the circular spot on the detector elements 20-1, 20-2a, 20-2b, 20-3a, and 20-3b) are not centered, so that symmetry of the detector output signals is broken due to the beam landing error. However, the resulting coherent crosstalk effects can be significantly reduced by the proposed five spot system.

The output signal of the four quadrant detector elements of the focusing system may be obtained based on the following equation:

$$FE = (A + C) - (B + D) \tag{2}$$

where A, B, C, and D represent detection outputs generated by the four quadrant detector elements. The focus error signal FE is indicative of a defocusing degree of the light radiated onto the surface of the inner information layer L1 of the dual-layer optical disc.

The overall focus error signal obtained by the three-spot focus error system can now be obtained based on the following equation:

$$FE = FEc + \gamma \, (FEa + FEb) \tag{3}$$

The coherent crosstalk is cancelled when the amplitude effect of the main beam is in anti-phase with the amplitude effect of the side-beams. Thus, the optical path difference for the side-beams should preferably be $\lambda/2$ or an odd multiple thereof In case the satellite spots of the side-beams are positioned on the grooves, an optical difference of the distance from the satellite spots to the main spot on the disc should be 163 $\mu$m in case of a spacer layer of 55 $\mu$m with refractive index m = 1.5 and a wavelength $\lambda$ of 655nm. When the satellite spots are located in between the grooves, a typical single-path optical path difference of $\lambda/8$ should be taken into account for the proper choice of the angles of the side-beams.

The requirements for coherent crosstalk cancellation in the tracking channel can be expressed as follows:

$$2ns(1-\cos(\alpha)) - 2\Delta\varphi = k\lambda \tag{4}$$

wherein s denotes the thickness of the spacer layer between the upper and lower information layers L0 and L1, n denotes the refractive index, $\Delta\varphi$ denotes the optical path difference to be considered when the satellite spots are located in between the grooves, and $\alpha$ denotes the angle of the side-beams with respect to the main beam.

Similarly, the requirement for coherent crosstalk cancellation in the focus error system and the HF-system can be expressed as follows:

$$2ns(1-\cos(\alpha))-2\Delta\varphi = (2k-1)\lambda/2 \tag{5}$$

As regards the above conditions for crosstalk cancellation, it is to be noted that the above wavelength-dependent values suggested for the optical path differences between the main beam and the respective pair of side beams not necessarily have to be met precisely. Although, in practice, variations will occur around the suggested preferred values, crosstalk may still be suppressed to a sufficient extent. Therefore, it may be sufficient if these conditions are substantially met.

Having the additional three-spot focus detector configuration, a measure for the magnitude of the coherent crosstalk CC on the HF-signal can be obtained as well, based on the following expression:

$$CC = CAc - \gamma (CAa + CAb) \tag{6}$$

wherein CAa and CAb denote the respective values of the HF output signals of the outer side-beam detector 20-3a and 20-3b, respectively, and CAc denotes the HF output signal of the main detector 20-1. These HF signals are obtained as direct output signals of the quadrant detector elements without any intermediate processing, e.g. as indicated by equation (2). This coherent crosstalk signal CC can optionally be used to correct envelope variations in the HF-signals due to the coherent crosstalk. For this coherent crosstalk signal CC a location of the satellite spots of the pair of outer side-beams in the groove of the lower information layer L1, as in the case of the main beam, is preferred.

The processing expressed by equations (1), (3) and (6) may be obtained by a respective processing or computing element controlled by corresponding software routines, or may be obtained based on digital signal processing circuits. In Fig. 3, these systems or circuits are indicated by blocks 22, 24, 26 which are adapted to perform the processing expressed in equations (1), (3) and (6). Of course, the three processing blocks 22, 24, 26 may be implemented as a single processor or computing element or a single signal processor. The output signal of the processing element 26, which generates the coherent crosstalk signal CC, may be used to control an amplitude variation circuit 28, which may be an amplifier with automatic gain control (AGC) function so as to correct or compensate envelope variations on the HF output signal of the pickup device, and to generate a corrected HF output signal $HF_{corr}$.

In summary, a detector configuration for a pickup device of a disc driving device for multi-layer record carriers has been described, wherein main beam detector means and two pairs of side-beam detector means disposed on opposite sides of the main beam detector means are provided for suppressing crosstalk effects. As an example, the obtained two three-spot systems can be used for focus error signals as well as tracking error signals, wherein satellite spots can be controlled to have a desired fringe pattern either in-phase or anti-phase with that of the main beam. Besides the reduction of focusing and tracking errors, the above measure further allows to reduce spacer layer thickness.

It is noted that the driving device, pickup device, and detector configuration according to the preferred embodiment are applicable to any kind of optical disc in order to prevent crosstalk effects. Moreover, the beam splitter 40 may be implemented by any kind of beam splitting element by means of which a central main beam and additional side-beam can be generated at the above predetermined angles. As an example, any kind of diffraction, refraction or mirror effect could be used in the beam splitting element. Additionally, other arrangements of the detector elements on the detector 20 may be provided to detect side-beams and the main beam required for compensating crosstalk effects. It is further noted that additional side-beam detector elements may be provided to enhance the effect described in the preferred embodiment.

It should further be noted that the above-mentioned embodiment illustrates rather than limits the invention and that those persons skilled in the art will be capable of designing many alternative embodiments without departing from the scope of the invention as defined in the appended claims. In the claims, any reference sign placed in parentheses shall not be construed as limiting the claims. The words "comprising" and "comprises", and the like, do not exclude the presence of elements or steps other than those listed in any claim or the specification as a whole. The singular reference of an element does not exclude the plural reference of such elements and vice versa. The mere fact that certain measures are recited in mutually different dependent claims does not indicate that a combination of these measures cannot be used to advantage.

**Claims**

1. A detector arrangement for detecting a radiation pattern generated by reflection of a main beam and a plurality of side-beams on a multi-layer record carrier, said detector arrangement comprising:

   main beam detector means (20-1) for detecting said main beam reflected from said multi-layer record carrier;
   a pair of first side-beam detector means (20-2a, 20-2b) disposed on opposite sides of said main beam detector means (20-1) at a first predetermined distance from said main beam detector means (20-1) and arranged for detecting a respective first pair of side-beams of said plurality of side-beams; and

a pair of second side-beam detector means (20-3a, 20-3b) disposed on opposite sides of said main beam detector means (20-1) at a second predetermined distance from said main beam detector means (20-1) and arranged for detecting a respective pair of second side beams of said plurality of side beams.

2. A detector arrangement according to claim 1, wherein said second side-beam detector means each comprise four quadrant detector elements (A, B, C, D) for obtaining a focus error signal, and wherein said second predetermined distance is larger than said first predetermined distance.

3. A detector arrangement according to claim 1 or 2, wherein said first side-beam detector means each comprise two half detector elements (A, B) for obtaining a push-pull tracking error signal.

4. A pickup device for a multi-layer record carrier, comprising a detector arrangement according to any one of claims 1 to 3, a radiation source (30) for emitting a radiation beam towards said multi-layer record carrier, and beam splitting means (40) for dividing said radiation beam emitted from said radiation source (30) into said main beam and said plurality of side beams and radiating said main beam and said side beams to said multi-layer record carrier.

5. A device according to claim 4, wherein said beam splitting means (20) comprises a diffraction grating.

6. A driving device for providing access to a multi-layer record carrier, said driving device comprising a pickup device according to claim 4 or 5.

7. A device according to claim 6, wherein said beam splitting means (20) is adapted to generate said first pair of side beams at a first predetermined angle to said main beam, and to generate said second pair of side beams at a second predetermined angle to said main beam.

8. A device according to claim 7, wherein said first predetermined angle is selected to obtain a path difference between said first pair of side beams and said main beam of substantially zero or substantially an integer multiple of the radiation wavelength of said radiation source (30), and wherein said second predetermined angle is selected to obtain a path difference between said second pair of side beams and said main beam of substantially half said radiation wavelength or substantially an odd multiple of half said radiation wavelength.

9. A device according to claim 8, wherein said beam splitting means (20) is adapted to generate said first pair of side beams in a manner so that they impinge between grooves of a target information layer (L1) of said multi-layer record carrier, and to generate said second pair of side beams in a manner so that they impinge on respective grooves of a target information layer (L1) of said multi-layer record carrier.

10. A device according to any one of claims 4 to 9, further comprising focus error determining means (22) for calculating a focus error (FE) by adding a value derived from the sum of focus error signals (FEa, FEb) obtained from said pair of second side-beam detector means (20-3a, 20-3b) from a value of a focus error signal (FEc) obtained from said main detector means (20-1), and tracking error determining means (24) for calculating a tracking error (PP) by subtracting a value derived from the sum of tracking error signals (PPa, PPb) obtained from said pair of first side-beam detector means (20-2a, 20-2b) from a value of a tracking error signal (PPc) obtained from said main detector means (20-1)

11. A device according to any one of claims 4 to 9, further comprising calculation means (26) for calculating a crosstalk value (CC) by subtracting a value derived from the sum of output signals obtained from said pair of second side-beam detector means (20-3a, 20-3b) from a value of an output signal obtained from said main detector means (20-1).

12. A device according to claim 10, further comprising adjusting means (28) for adjusting based on said crosstalk value (CC) an envelope of a readout signal of said driving device.


**Patentansprüche**

1. Detektoranordnung zum Detektieren eines Strahlungsmusters, das durch Reflexion eines Hauptstrahls und mehrerer Seitenstrahlen auf einem mehrschichtigen Aufzeichnungsträger erzeugt wird, wobei die Detektoranordnung Folgendes umfasst:

Hauptstrahl-Detektormittel (20-1) zum Detektieren des von dem mehrschichtigen Aufzeichnungsträger reflektierten Hauptstrahls;

ein Paar von ersten Seitenstrahl-Detektormitteln (20-2a, 20-2b), die an gegenüberliegenden Seiten der Hauptstrahl-Detektormittel (20-1) in einer ersten vorbestimmten Distanz von den Hauptstrahl-Detektormitteln (20-1) angeordnet und zum Detektieren eines entsprechenden ersten Paars von Seitenstrahlen von den mehreren Seitenstrahlen eingerichtet sind; und

ein Paar von zweiten Seitenstrahl-Detektormitteln (20-3a, 20-3b), die an gegenüberliegenden Seiten der Hauptstrahl-Detektormittel (20-1) in einer zweiten vorbestimmten Distanz von den Hauptstrahl-Detektormitteln (20-1) angeordnet und zum Detektieren eines entsprechenden Paars von zweiten Seitenstrahlen von den mehreren Seitenstrahlen eingerichtet sind.

2. Detektoranordnung nach Anspruch 1, wobei die zweiten Seitenstrahl-Detektormittel jeweils vier Quadranten-Detektorbauteile (A, B, C, D) zum Erhalten eines Fokusfehlersignals umfassen und wobei die zweite vorbestimmte Distanz größer ist als die erste vorbestimmte Distanz.

3. Detektoranordnung nach Anspruch 1 oder 2, wobei die ersten Seitenstrahl-Detektormittel jeweils zwei Halbdetektorbauteile (A, B) zum Erhalten eines Push-Pull-Spurfehlersignals umfassen.

4. Aufnahmeeinrichtung für einen mehrschichtigen Aufzeichnungsträger, die eine Detektoranordnung nach einem der Ansprüche 1 bis 3, eine Strahlenquelle (30) zum Emittieren eines Strahlenbündels zu dem mehrschichtigen Aufzeichnungsträger, und Strahlenteilungsmittel (40) zum Teilen des von der Strahlenquelle (30) emittierten Strahlenbündels in den Hauptstrahl und die mehreren Seitenstrahlen und das Strahlen des Hauptstrahls und der Seitenstrahlen auf den mehrschichtigen Aufzeichnungsträger umfasst.

5. Einrichtung nach Anspruch 4, wobei das Strahlenteilungsmittel (20) ein Beugungsgitter umfasst.

6. Antriebseinrichtung zum Bereitstellen von Zugriff auf einen mehrschichtigen Aufzeichnungsträger, wobei die Antriebseinrichtung eine Aufnahmeeinrichtung nach Anspruch 4 oder 5 umfasst.

7. Einrichtung nach Anspruch 6, wobei das Strahlenteilungsmittel (20) angepasst ist, um das erste Paar von Seitenstrahlen in einem ersten vorbestimmten Winkel zu dem Hauptstrahl zu erzeugen, und das zweite Paar von Seitenstrahlen in einem zweiten vorbestimmten Winkel zu dem Hauptstrahl zu erzeugen.

8. Einrichtung nach Anspruch 7, wobei der erste vorbestimmte Winkel ausgewählt ist, um einen Gangunterschied zwischen dem ersten Paar von Seitenstrahlen und dem Hauptstrahl von im Wesentlichen null oder im Wesentlichen einer Ganzzahl, die ein Vielfaches der Strahlungswellenlänge der Strahlenquelle (30) ist, zu erhalten, und wobei der zweite vorbestimmte Winkel ausgewählt ist, um einen Gangunterschied zwischen dem zweiten Paar von Seitenstrahlen und dem Hauptstrahl von im Wesentlichen der Hälfte der Strahlungswellenlänge oder im Wesentlichen einem ungeraden Vielfachen der Hälfte der Strahlenwellenlänge zu erhalten.

9. Einrichtung nach Anspruch 8, wobei das Strahlenteilungsmittel (20) zum Erzeugen des ersten Paars von Seitenstrahlen auf eine Weise, derart, dass sie zwischen den Rillen einer Zielinformationsschicht (L1) des mehrschichtigen Aufzeichnungsträgers auftreffen, und zum Erzeugen des zweiten Paars von Seitenstrahlen auf eine Weise, derart, dass sie auf entsprechenden Rillen einer Zielinformationsschicht (L1) des mehrschichtigen Aufzeichnungsträgers auftreffen, angepasst ist.

10. Einrichtung nach einem der Ansprüche 4 bis 9, die ferner Fokusfehler-Bestimmungsmittel (22) zum Berechnen eines Fokusfehlers (FE) durch Addieren eines von der Summe von vom Paar von zweiten Seitenstrahl-Detektormitteln (20-3a, 20-3b) erhaltenen Fokusfehlersignalen (FEa, FEb) abgeleiteten Werts zu einem von den Hauptdetektormitteln (20-1) erhaltenen Wert eines Fokusfehlersignals (FEc) und Spurfehler-Bestimmungsmittel (24) zum Berechnen eines Spurfehlers (PP) durch Subtrahieren eines von der vom Paar von ersten Seitenstrahl-Detektormitteln (20-2a, 20-2b) erhaltenen Summe von Spurfehlersignalen (PPa, PPb) abgeleiteten Werts von einem Wert eines von den Hauptdetektormitteln (20-1) erhaltenen Spurfehlersignals (PPc) umfasst.

11. Einrichtung nach einem der Ansprüche 4 bis 9, die ferner Berechnungsmittel (26) zum Berechnen eines Übersprechwerts (CC) durch Subtrahieren eines von den von dem Paar von zweiten Seitenstrahl-Detektormitteln (20-3a, 20-3b) erhaltenen Ausgangssignalen abgeleiteten Werts von einem Wert eines von den Hauptdetektormitteln (20-1) erhaltenen Ausgangssignals umfasst.

**12.** Einrichtung nach Anspruch 10, die ferner Einstellungsmittel (28) zum Einstellen einer Hüllkurve eines Auslesesignals der Antriebseinrichtung basierend auf dem Übersprechwert (CC) umfasst.

**Revendications**

**1.** Montage détecteur pour détecter un motif de rayonnement généré par réflexion d'un faisceau principal et d'une pluralité de faisceaux latéraux sur un support d'enregistrement multicouche, ledit montage détecteur comprenant :

des moyens détecteurs de faisceau principal (20-1) pour détecter ledit faisceau principal réfléchi par ledit support d'enregistrement multicouche;
une paire de premiers moyens détecteurs de faisceau latéral (20-2a, 20-2b) disposés sur des côtés opposés desdits moyens détecteurs de faisceau principal (20-1) à une première distance prédéterminée desdits moyens détecteurs de faisceau principal (20-1) et à même de détecter une première paire respective de faisceaux latéraux de ladite pluralité de faisceaux latéraux, et
une paire de deuxièmes moyens détecteurs de faisceau latéral (20-3a, 20-3b) disposés sur des côtés opposés desdits moyens détecteurs de faisceau principal (20-1) à une deuxième distance prédéterminée desdits moyens détecteurs de faisceau principal (20-1) et à même de détecter une paire respective de deuxièmes faisceaux latéraux de ladite pluralité de faisceaux latéraux.

**2.** Montage détecteur suivant la revendication 1, dans lequel lesdits deuxièmes moyens détecteurs de faisceau latéral comprennent chacun quatre éléments détecteurs à quadrant (A, B, C, D) pour obtenir un signal d'erreur de focalisation, et dans lequel ladite deuxième distance prédéterminée est supérieure à ladite première distance prédéterminée.

**3.** Montage détecteur suivant la revendication 1 ou 2, dans lequel lesdits premiers moyens détecteurs de faisceau latéral comprennent chacun deux moitiés d'éléments détecteurs (A, B) pour obtenir un signal d'erreur de poursuite symétrique.

**4.** Dispositif capteur pour un support d'enregistrement multicouche, comprenant un montage détecteur suivant l'une quelconque des revendications 1 à 3, une source de rayonnement (30) pour émettre un faisceau de rayonnement vers ledit support d'enregistrement multicouche, et des moyens de séparation de faisceau (40) pour diviser ledit faisceau de rayonnement émis depuis ladite source de rayonnement (30) en ledit faisceau principal et ladite pluralité de faisceaux latéraux et rayonner ledit faisceau principal et lesdits faisceaux latéraux vers ledit support d'enregistrement multicouche.

**5.** Dispositif suivant la revendication 4, dans lequel lesdits moyens de séparation de faisceau (20) comprennent un réseau de diffraction.

**6.** Dispositif d'entraînement pour permettre l'accès à un support d'enregistrement multicouche, ledit dispositif d'entraînement comprenant un dispositif capteur suivant la revendication 4 ou 5.

**7.** Dispositif suivant la revendication 6, dans lequel lesdits moyens de séparation de faisceau (20) sont à même de générer ladite première paire de faisceaux latéraux à un premier angle prédéterminé par rapport audit faisceau principal, et de générer ladite deuxième paire de faisceaux latéraux à un deuxième angle prédéterminé par rapport audit faisceau principal.

**8.** Dispositif suivant la revendication 7, dans lequel ledit premier angle prédéterminé est sélectionné pour obtenir une différence de chemin entre ladite première paire de faisceaux latéraux et ledit faisceau principal pratiquement nulle ou correspondant pratiquement à un multiple entier de la longueur d'onde de rayonnement de ladite source de rayonnement (30), et dans lequel ledit deuxième angle prédéterminé est sélectionné pour obtenir une différence de chemin entre ladite deuxième paire de faisceaux latéraux et ledit faisceau principal de pratiquement la moitié de ladite longueur d'onde de rayonnement ou correspondant pratiquement à un multiple impair de la moitié de ladite longueur d'onde de rayonnement.

**9.** Dispositif suivant la revendication 8, dans lequel lesdits moyens de séparation de faisceau (20) sont à même de générer ladite première paire de faisceaux latéraux de manière à ce qu'ils frappent entre des sillons d'une couche d'informations cible (L1) dudit support d'enregistrement multicouche, et de générer ladite deuxième paire de faisceaux latéraux de manière à ce qu'ils frappent des sillons respectifs d'une couche d'informations cible (L1) dudit support d'enregistrement multicouche.

10. Dispositif suivant l'une quelconque des revendications 4 à 9, comprenant en outre des moyens de détermination d'erreur de focalisation (22) pour calculer une erreur de focalisation (FE) en ajoutant une valeur dérivée de la somme des signaux d'erreur de focalisation (FEa, FEb) obtenus de ladite paire de deuxièmes moyens détecteurs de faisceau latéral (20-3a, 20-3b) d'une valeur d'un signal d'erreur de focalisation (FEc) obtenu desdits moyens détecteurs de faisceau principal (20-1), et des moyens de détermination d'erreur de poursuite (24) pour calculer une erreur de poursuite (PP) en soustrayant une valeur dérivée de la somme des signaux d'erreur de poursuite (PPa, PPb) obtenus de ladite paire de premiers moyens détecteurs de faisceau latéral (20-2a, 20-2b) d'une valeur d'un signal d'erreur de poursuite (PPc) obtenu desdits moyens détecteurs de faisceau principal (20-1).

11. Dispositif suivant l'une quelconque des revendications 4 à 9, comprenant en outre des moyens de calcul (26) pour calculer une valeur de diaphonie (CC) en soustrayant une valeur dérivée de la somme de signaux de sortie obtenus de ladite paire de deuxièmes moyens détecteurs de faisceau latéral (20-3a, 20-3b) d'une valeur d'un signal de sortie obtenu desdits moyens détecteurs de faisceau principal (20-1).

12. Dispositif suivant la revendication 10, comprenant en outre des moyens de réglage (28) pour régler, sur la base de ladite valeur de diaphonie (CC), une enveloppe d'un signal de lecture dudit dispositif d'entraînement.

| L1 | | |
|----|--|--|
| L0 | | |

50

20

10

40

30

DI

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5923632 A